Europäisches Patentamt

European Patent Office

Office européen des brevets

(11) Publication number: **0 201 143 B1**

# EUROPEAN PATENT SPECIFICATION

(45) Date of publication of patent specification: **28.08.91**   (51) Int. Cl.⁵: **A23G 9/04, A23G 9/06**

(21) Application number: **86200797.8**

(22) Date of filing: **06.05.86**

(54) A method for producing an ice confection product.

(30) Priority: **09.05.85 GB 8511702**

(43) Date of publication of application:
**17.12.86 Bulletin 86/46**

(45) Publication of the grant of the patent:
**28.08.91 Bulletin 91/35**

(84) Designated Contracting States:
**AT BE CH DE FR GB IT LI NL SE**

(56) References cited:
**GB-A- 1 050 213**
**GB-A- 1 095 004**
**US-A- 4 398 394**

(73) Proprietor: **UNILEVER NV**
**Burgemeester s'Jacobplein 1 P.O. Box 760**
**NL-3000 DK Rotterdam(NL)**

(84) Designated Contracting States:
**BE CH DE FR IT LI NL SE AT**

Proprietor: **UNILEVER PLC**
**Unilever House Blackfriars P.O. Box 68**
**London EC4P 4BQ(GB)**

(84) Designated Contracting States:
**GB**

(72) Inventor: **Bee, Rodney David**
**10 Stevenson Court Eaton Ford**
**St. Neots PE19 3LS(GB)**

(74) Representative: **Keppels, Willem Richard En-**
**gelbertus Gerardus, Drs. et al**
**Unilever N.V. Patent Division P.O.Box 137**
**NL-3130 AC Vlaardingen(NL)**

## Description

The invention relates to a method of preparing a carbonated ice confection product wherein $CO_2$-water clathrate and a liquid aqueous phase which may contain solid ice are combined.

A similar method is known from GB-A-1 050 213. This method comprises combining an aqueous liquid, such as water and milk with a frozen "confection", consisting of a frozen dessert body, e.g. ice cream and a separate body of carbonated ice and preferably an amount of syrup containing sweetener and flavour. Upon contact with the liquid the carbonated ice will melt resulting in cooling the liquid and setting carbon dioxide free, which will partly escape and give the liquid effervescence. Thereafter the frozen dessert, flavouring and sweetener are stirred into the liquid. The product obtained in this way cannot be stored and should be consumed right after preparation as otherwise the effervescence will have ceased. The amount of carbon dioxide cannot be incorporated in a reproducible and controlled way into the final product using this method.

An object of the invention is to provide a method with which the above problems may be lessened or even solved.

To that purpose the invention provides a method as summarized hereinbefore which is characterized in that $CO_2$-water clathrate-containing particles are exposed to such pressure, temperature and $CO_2$ and water partial pressure conditions that a protective layer will be formed on the particle surface and these particles are mixed with the liquid phase which has a temperature such that frozen water would not be melted or dissolved overall in said liquid phase and afterwards the temperature of the mixture is lowered to a usual storage temperature for ice confection.

The method of the invention provides an ice confection product comprising a mixture of liquid and solid water, sugar, flavour and, if required, stabiliser, emulsifier, protein, fat and air, having $CO_2$ - water clathratecontaining particles distributed therein.

In US-A-4 398 394 likewise a method for preparing a carbonated drink is described, wherein a body of carbondioxide - water clathrate and ice and if desired flavouring matter and sweetening matter is put into contact with an aqueous liquid, whereby the ice is melted and the clathrate decomposed to liberate carbon dioxide. The resulting carbonated drink should be consumed within short as otherwise all carbon dioxide will have escaped.

GB-A-1 095 004 describes a similar method for carbonating beverages and confections by adding briquettes, bars etc. of a carbonated ice product whereby the latter will dissolve to give a sustained evolution of carbon dioxide gas. The resulting product should be consumed right away as otherwise the effervescence will have gone. More of these prior art processes meets the aim of incorporating a reproducible and controlled amount of carbon dioxide into the product as most of it escapes before consumption.

In this specification $CO_2$-water clathrate is meant to comprise any $CO_2$-containing clathrate such as double clathrates and mixed clathrates. For a better description thereof reference is made to D.W. Davidson; Clathrate Hydrates in water - A comprehensive Treatise; Vol. 2, Chapter 3, Ed. Franks.

When producing an ice confection product according to this invention the liquid phase usually contains water-ice crystals before the clathrate-containing particles are added, which water-ice crystals are in equilibrium with the liquid phase and are forming therewith a slurry. This slurry may be obtained in a usual manner by feeding the unfrozen mix to a scraped-surface heat exchanger wherein it is cooled to a temperature of about -0 to -7° C or even lower.

In practice it is to be preferred that the $CO_2$ -water clathrate-containing particles are exposed to such $CO_2$ pressure and temperature conditions, that $CO_2$ will evolve from the particle surfaces until a protective ice layer is formed, which for practical purposes prevents further $CO_2$ evolution under atmospheric conditions at temperatures below the melting temperature of ice. Usually this protective ice layer is formed within 15 seconds and consequently the stabilisation treatment is to be carried out for more than 15 seconds.

A protective layer can also be formed around the $CO_2$ -water clathrate-containing particles by exposing these particles to a water-containing environment under such conditions that a layer of solid water condenses on the surfaces of the particles. This environment preferably comprises water vapour, which is condensed on the surfaces of the particles to form a solid protective ice layer thereon.

Although the particle sizes of the clathrate-containing particles can be of the same order as the ice particles in the ice confection product to which the clathrate is to be added, in practice preferably particle sizes of from 200 to 2000 $\mu$m are used. By incorporating relatively large clathrate-containing particles, preferably having sizes in the range 0.2 to 1 cm, a product is obtained giving a peculiar sensation on eating.

In this specification the term ice confection product is used in a broad sense, comprising products such

2

as water-ice confection and ice-cream.

The invention will be exemplified in the following examples.

Example 1

An ice mix containing

```
18      g sucrose
6       g corn syrup 63 DE (80% by weight)
0.1     g locust bean gum
0.3     g malic acid
0.25    g sodium citrate
0.45    g citric acid
3.0     g lemon concentrate
0.003   g tartrazine
0.15    g flavour (Zimmerman 139)

water to 100 g
```

is cooled in a scraped-wall heat exchanger to -5°C to form a fluid slush product.

In a pressurized reactor, $CO_2$, is contacted with water at a pressure of 35 bar and a temperature of 5°C. Thereafter the temperature is reduced to -15°C, such that the carbonated composite solidifies. After removal from the reactor, the clathrate-ice composite formed by this procedure is ground in a cooled mill to a particle size of 500-2000 $\mu$m. These clathrate-ice composite particles are exposed to the atmosphere for 30 seconds and thereafter 25 g of this particulate clathrate-water ice composite is added to 75 g of the slush product as described above.

After mixing, the combined product is frozen to -20°C for storage.

EXAMPLE II

An ice mix containing

```
10%       skim milk powder
 2.6%     whey powder
15%       sucrose
 7%       dextrose monohydrate
 2.5%     maltodextrin DE 40
 0.2%     locust bean gum
 0.02%    kappa carrageenan
 7%       palm kernel oil
 0.5%     mgp (mono-diglyceride)
 0.3%     malic acid
 0.3%     sodium citrate
 0.003%   red colour (Ponceau 4R)
 0.1%     strawberry flavour (ex Bush Boake
                                          Allen)

water to 100%
```

is aerated and cooled in a scraped-surface heat exchanger to -6°C to form a creamy fluid.

A clathrate-containing product prepared as described in Example 1 is ground to coarse particles and a sieve fraction from 1 to 5 mm is separated, stabilized as described in Example 1 and admixed in an amount of 50 g to 250 g of creamy ice fluid. This combined mixture is frozen to -20°C for storage.

**Claims**

1. A method of preparing a carbonated ice confection product wherein $CO_2$-water clathrate and a liquid aqueous phase which may contain solid ice are combined, characterized in that $CO_2$-water clathrate-containing particles are exposed to such pressure, temperature and $CO_2$ and water partial pressure conditions that a protective layer will be formed on the particle surface and these particles are mixed with the liquid phase which has a temperature such that frozen water would not be melted or dissolved overall in said liquid phase and afterwards the temperature of the mixture is lowered to an usual storage temperature for ice confections.

2. A method according to claim 1, wherein the $CO_2$-water clathrate-containing particles are exposed to such $CO_2$ pressure and temperature conditions, that $CO_2$ will evolve from the particle surfaces until a protective ice layer is formed, which for practical purposes prevents further $CO_2$ evolution under atmospheric conditions at temperatures below the melting temperature of ice.

3. A method according to claim 1, wherein the $CO_2$-water-clathrate-containing particles are exposed to a water-containing environment under such conditions that a layer of solid water condenses on the surfaces of said particles.

4. A method according to claim 1, wherein the liquid phase contains water-ice crystals before adding the clathrate-containing particles.

5. A method according to claim 2, wherein the $CO_2$-water clathrate-containing particles are exposed to atmospheric conditions at a temperature below the melting point of ice for at least 15 seconds.

6. A method according to any one of the preceding claims, wherein $CO_2$-water clathrate-containing particles having dimensions in the range of 200 to 2000 $\mu$m are mixed with the liquid phase.

4

EP 0 201 143 B1

7. A method according to any one of the claims 1 to 5, wherein $CO_2$-water clathrate-containing particles having dimensions in the range of 0.2 to 1 cm are mixed with the liquid phase.

**Revendications**

1. Un procédé de fabrication de glace comestible carbonatée dans lequel le composé d'inclusion $CO_2$-eau et une phase liquide aqueuse pouvant contenir de la glace solide sont associés, caractérisé en ce que des particules contenant le composé d'inclusion $CO_2$-eau sont exposées à des conditions de pression, de température et de pression partielle d'eau et de $CO_2$ telles qu'une couche de protection est formée sur la surface des particules et en ce que ces particules sont mélangées à la phase liquide, dont la température est telle que l'eau sous forme de glace ne peut fondre ou se dissoudre en totalité dans ladite phase liquide, et en ce qu'ensuite la température du mélange est abaissée à une température habituelle de stockage des glaces comestibles.

2. Un procédé selon la revendication 1, dans lequel les particules contenant le composé d'inclusion $CO_2$-eau sont exposées à des conditions de pression de $CO_2$ et de température telles que le $CO_2$ se dégage de la surface des particules jusqu'à ce qu'une couche de protection de glace soit formée, laquelle, à fins pratiques empêche le dégagement supplémentaire de $CO_2$ dans des conditions atmosphériques à des températures inférieures à la température de liquéfaction de la glace.

3. Un procédé selon la revendication 1, dans lequel les particules contenant le composé d'inclusion $CO_2$-eau sont exposées à un environnement contenant de l'eau dans des conditions telles qu'une couche d'eau solide se condense à la surface desdites particules.

4. Un procédé selon la revendication 1, dans lequel la phase liquide contient des cristaux de sorbet avant l'adjonction des particules contenant le composé d'inclusion.

5. Un procédé selon la revendication 2, dans lequel les particules contenant le composé d'inclusion $CO_2$-eau sont exposées à des conditions atmosphériques à une température inférieure au point de liquéfaction de la glace pendant au moins 15 secondes.

6. Un procédé selon l'une des revendications précédentes, dans lequel des particules contenant le composé d'inclusion $CO_2$-eau ayant des dimensions comprises dans la gamme allant de 200 à 2000 $\mu$m sont mélangées à la phase liquide.

7. Un procédé selon l'une des revendications 1 à 5, dans lequel les particules contenant le composé d'inclusion $CO_2$-eau ayant des dimensions comprises dans la gamme allant de 0,2 à 1 cm sont mélangées à la phase liquide.

**Patentansprüche**

1. Verfahren zur Herstellung eines kohlensäurehältigen Eiskonfektproduktes, worin $CO_2$-Wasser-Clathrat und eine flüssige wässerige Phase, die festes Eis enthalten kann, vereinigt werden, dadurch gekennzeichnet, daß $CO_2$-Wasser-Clathrat enthaltende Teilchen solchen Druck-, Temperatur- und $CO_2$ - und Wasserpartialdruckbedingungen ausgesetzt werden, daß sich auf der Teilchenoberfläche eine Schutzschicht bildet, und diese Teilchen mit der flüssigen Phase gemischt werden, die eine derartige Temperatur aufweist, daß das gefrorene Wasser in der flüssigen Phase nicht zur Gänze geschmolzen oder gelöst wird, und danach die Temperatur der Mischung auf eine übliche Lagertemperatur für Eiskonfekt gesenkt wird.

2. Verfahren nach Anspruch 1, worin die $CO_2$ -Wasser-Clathrat enthaltenden Teilchen solchen $CO_2$ - Druck- und Temperaturbedingungen ausgesetzt werden, daß $CO_2$ von der Oberfläche der Teilchen freigesetzt wird, bis eine schützende Eisschicht gebildet ist, die für praktische Zwecke weitere $CO_2$ - Freisetzung unter atmosphärischen Bedingungen bei Temperaturen unterhalb der Schmelztemperatur von Eis verhindert.

3. Verfahren nach Anspruch 1, worin die $CO_2$ -Wasser-Clathrat enthaltenden Teilchen unter solchen Bedingungen einer wasserhaltigen Umgebung ausgesetzt werden, daß eine Schicht festen Wassers auf

5

der Oberfläche 6er Teilchen kondensiert.

4. Verfahren nach Anspruch 1, worin die flüssige Phase vor der Zugabe der clathrathaltigen Teilchen Wasser-Eiskristalle enthält.

5. Verfahren nach Anspruch 2, worin die $CO_2$-Wasser-Clathrat enthaltenden Teilchen bei einer Temperatur unterhalb des Schmelzpunktes von Eis wenigstens 15 Sekunden atmosphärischen Bedingungen ausgesetzt werden.

6. Verfahren nach einem der vorhergehenden Ansprüche, worin $CO_2$-Wasser-Clathrat enthaltende Teilchen mit Abmessungen im Bereich von 200 bis 2000 $\mu$m mit der flüssigen Phase gemischt werden.

7. Verfahren nach einem der Ansprüche 1 bis 5, worin $CO_2$-Wasser-Clathrat enthaltende Teilchen mit Abmessungen im Bereich von 0,2 bis 1 cm mit der flüssigen Phase gemischt werden.